# EUROPÄISCHE PATENTSCHRIFT

(11) **EP 0 355 311 B1**
(45) Veröffentlichungstag und Bekanntmachung des Hinweises auf die Patenterteilung: **13.12.1995**
(21) Anmeldenummer: 89111428.2
(22) Anmeldetag: 23.06.1989
(51) Int. Cl.: F41G 7/30, G01J 1/42, G01S 3/784

(54) **Verfahren und Vorrichtung zum Lenken von bewegten Objekten**
Method and device for guiding moving bodies
Procédé et dispositif de guidage d'objets mobiles

(30) Priorität: 25.08.1988 DE 3828767
(43) Veröffentlichungstag der Anmeldung: 28.02.1990
(73) Patentinhaber: Daimler-Benz Aerospace Aktiengesellschaft, 81663 München (DE)
(72) Erfinder: Dirscherl, Reinhard, Dr., D-8028 Taufkirchen (DE); Lill, Ernst, Dr., D-8000 München 90 (DE)

(56) Entgegenhaltungen:
- EP-A- 0 206 912
- EP-A- 0 355 310
- US-A- 3 643 093
- US-A- 3 931 462
- US-A- 4 009 393
- US-A- 4 202 515

## Beschreibung

Die Erfindung betrifft ein Verfahren und eine Vorrichtung zum Lenkung von bewegten Objekten.

Das Erfassen einer voll einem Flugkörperleuchtsatz herrührenden Strahlung durch einen Punktdetektor und Auswertung der gemessenen Signale in einer Auswerteelektronik ist bereits der DE-B-2944261 zu entnehmen. Das Detektorsystem dient auch dort der Führung des Flugkörpers entlang einer optischen Achse. Die bekannten Verfahren zur Flugkörperlenkung verwenden Detektoren, die im wesentlichen im Infrarotbereich arbeiten. Bei dieser Patentschrift soll der Punktdetektor die Intensität einer Strahlung weitgehend unabhängig vom Spektralbereich messen. Zur Messung der Intensität werden mit Hilfe einer Modulatorscheibe Modulationssignale erzeugt aus lückenlos aneinander gereihten Impulsen. In der Auswerteelektronik wird dann nur das modulierte Signal verarbeitet um den Flugkörperleuchtsatz von Störstrahlern zu trennen.

Ein weiteres System zur Lenkung von Flugkörpern in den freien Raum mittels eines Objekterfassungssystems einer Bodellstation, wobei laufend die Position des Flugkörpers geortet wird und diese Signale zur Lenkung herangezogen werden, ist aus der Druckschrift EP-A1-0 206 912 bekannt. Dieses System kann jedoch nicht im UV-Spektralbereich betrieben werden.

Aus der US-A-3 643 093 ist ein Brandmelder bekannt, der zwar UV-Licht im Solar-Blind-Bereich unterhalb 290 nm verwendet, jedoch ist dieses beschriebene Verfahren nicht zur Flugkörperlenkung einsetzbar.

Aufgabe der Erfindung ist es, ein Verfahren zur Erkennung und Ortung, sowie zum Lenken bewegter Objekte zu schaffen, das eine erhöhte Störungssicherheit aufweist.

Gelöst wird dies mit den Merkmalen des Verfahrensanspruchs 1 und des Vorrichtungsanspruchs 5. Weitere Merkmale der Erfindung sowie Ausgestaltungen und Vorteile sind weiteren Ansprüchen sowie der Beschreibung und Zeichnung von Ausführungsbeispielen zu entnehmen.

Mit dem neuen Sensor ist die Gewinnung und Ausnutzung eines Binärbildes zur Erkennung eines Flugkörpers oder anderer Objekte möglich. Weil der Sensor im UV-Solarstrahlungsbereich blind ist und die Sonne die einzige natürliche Hintergrundstrahlenquelle bildet, kann der Sensor einen Flugkörper oder ein ähnliches Objekt vor einem praktisch schwarzen Hintergrund sicher erkennen. Ein gewonnenes Binärbild hell/dunkel oder schwarz/grün hebt demnach die UV-Strahlenquelle am oder im Flugkörper oder ähnlichen Objekt deutlich vom Hintergrund ab. Die Störbarkeit durch thermische Strahler wird infolgedessen abgeblockt. Bewegliche Teile, wie z.B. eine Modulatorscheibe oder aufwendige Abtasteinrichtungen, sind nicht erforderlich. Die Lenksignale können mit Hilfe eines Rechners in Echtzeit gewonnen werden, wobei die Lenkung in an sich bekannter Weise durch Lenkdraht, Lenkglasfaser oder Leitstrahlverfahren (vgl. DE-B-2931321) erfolgen kann.

Das erfindungsgemäße Erkennungssystem mit dem neuen UV-strahlenempfindlichen Detektor kann mit Vorteil die UV-Signatur des Abgasstrahls eines Flugkörpertriebwerks erfassen. Seine Größe und zeitliche Änderung mit der Geschwindigkeit des Flugkörpers ist bekannt und wird im Rechner abgespeichert.

Die Signatur des Abgasstrahls (Plumes) kann gezielt auch im ultravioletten Spektralbereich durch Treibstoffzusätze beeinflußt werden (hinsichtlich emittierter Leistung und spektraler Verteilung).

Von Vorteil ist am Objekt eine zusätzliche chemische UV-Strahlenquelle pyrotechnischer Art anzubringen, z.B. als Patrone o.ä.

Auch eine spezielle, am Objekt angebrachte elektrische, pulsbare UV-Strahlenquelle ist vorteilhaft anwendbar und leicht steuerbar.

Ausführungsbeispiele der Erfindung sind nachstehend anhand der Beschreibung erläutert ohne hierauf beschränkt zu sein.

In den Zeichnungen zeigen:
- Fig. 1: die prinzipielle Anordnung eines Flugkörperlenkungs- und Ortungssystems mit geeigneter Bodenstation
- Fig. 2: eine Querschnittszeichnung des UV-Strahlungssensors mit Anordnung der Hauptkomponenten im Gehäuse
- Fig. 3: den prinzipiellen Aufbau des Flugkörperlenksystems als Blockschaltbild
- Fig. 4: das Bildauswertesystem
- Fig. 5: ein in die Anordnung nach Fig. 4 einbaubares elektronisches Zoomgerät (Gesichtsfeldsteuerung)
- Fig. 6: das Prinzip einer Mikrokanalplatte und einer Elektronenvervielfacherröhre in Ansicht und im Längsschnitt
- Fig. 7: das Prinzip einer intelligenten Auswertung von Bildinhalten verschiedener Spektralbereiche
- Fig. 8: zeigt ein Schaubild der Sensorempfindlichkeit und den betreffenden Spektralbereich,
- Fig. 9: zeigt eine Linsenanordnung, insbesondere eine Tricklinse um selektiv bestimmte Spektralbereiche zu betrachten,
- Fig. 10: eine Spiegelanordnung wie sie mit der Erfindung, insbesondere im Rahmen der Fig. 11 anwendbar ist,
- Fig. 11: eine Prismenanordnung kombiniert mit Spiegelanordnung,
- Fig. 12: eine Bildauswertung im Beispiel anhand eines Videobildes.

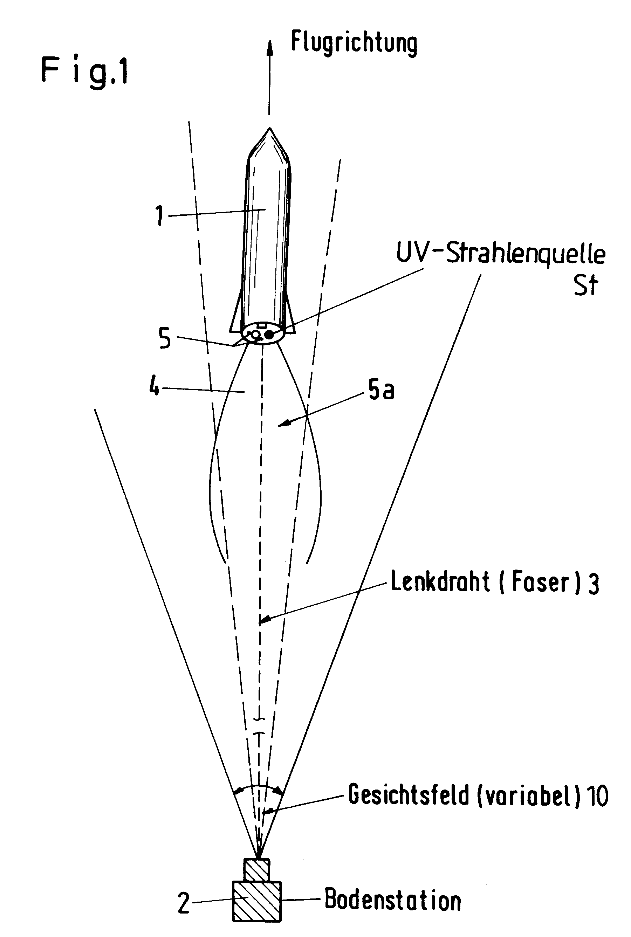

Fig. 1 zeigt den Flugkörper, z.B. eine Rakete, mit eingeschaltetem Triebwerk, dessen Rückstoß- bzw. Abgasstrahl zur Ortung und Führung herangezogen werden kann. Der Abgasstrahl ist bei gewissen Raketen, sei es mit Flüssigtreibstoff oder Festtreibstoff betriebenen, größer als der Durchmesser des Flugkörpers. Bekannte Flugkörper haben eine bekannte spezifische UV-Signatur des Plumes, die gespeichert werden kann und dann zur Erkennung mit den vom Sensor gemessenen Werten verglichen wird. Dabei kann mit Vorteil zur Erkennung herangezogen werden, die bekannte Beschleunigung und/oder Geschwindigkeit des bekannten Flugkörpers und damit die Größen- und Intensitätsabnahme insbesondere des Durchmessers des Abgasstrahls bzw. dessen UV-Plume. Außerdem ist der wellenlängenspezifische Intensitätsverlauf typisch und bei Verwendung eines vom Triebwerk separaten UV-Strahlers kann zusätzlich eine Pulsation oder Modulation die Erkennung fördern. Auch wird in einigen Fällen durch die Eigendrehung des Flugkörpers bei z.B. zwei oder mehreren Triebwerken und/oder Eintauchen des Ruders in den Abgasstrahl dieser und somit auch die UV-Signatur eine spezielle flugkörpereigene Modulation aufweisen.

In der Zeichnung eines Ausführungsbeispiels ist ein Flugkörper als Objekt mit 1 bezeichnet und die Bodenstation mit 2. Die Bodenstation enthält den elektrooptischen Teil des Erkennungs- bzw. Erfassungs- oder Ortungssystems und das Erzeugungssystem für die Lenkkommandos zusammengefaßt und ist möglichst mit nur einer Rechnereinheit versehen. Das Gesichtsfeld des ultraviolett empfindlichen Sensors ist gewünschtenfalls in relativ großen Grenzen wählbar.

Die Flugrichtung ist in Fig. 1 durch Pfeil an der Spitze des Flugkörpers angedeutet, ebenso dessen Hauptachse, in der z.B. ein Leitstrahl oder ein Lenkdraht oder eine Lichtleiterfaser 3 geführt sein kann. Der Flugkörper kann auch anderweitig vom Boden aus gelenkt werden. Der Abgasstrahl ist mit 4 bezeichnet und dessen UV-Plume mit 5. Ein UV-Strahler 6 kann separat angebracht sein. Dieser kann chemischer Art, pyrotechnischer Art oder elektrischer Art sein und jeweils eine kompakte, in sich geschlossene austauschbare Einheit (Patrone) bilden. Selbstverständlich kann auch das Triebwerk als chemisches oder pyrotechnisches Rückstoßtriebwerk ausgebildet sein, insbesondere mit einem Feststofftreibsatz oder Flüssigtreibsatz, um speziell ultraviolette Strahlen (Plume) auszusenden oder es können dem Treibstoff des Triebwerks chemische Zusätze beigemischt werden, sodaß das Plume starke UV-Anteile aufweist. Als Zusätze eignen sich hierfür Magnesium, Aluminium oder ähnliche Metallpulver wie an sich bekannt.

Gleichfalls bekannt sind geeignete ultraviolette Strahlenquellen, entweder Entladungslampen, z.B. mit Hohlkathode, wie Quecksilberdampflampen bzw. UV-Röhren oder Lampen mit Plasma-Entladung. Die elektrisch gesteuerten UV-Strahler lassen sich besonders leicht takten, pulsen bzw. kodieren oder modulieren nach jeder der hierfür bekannten Arten.

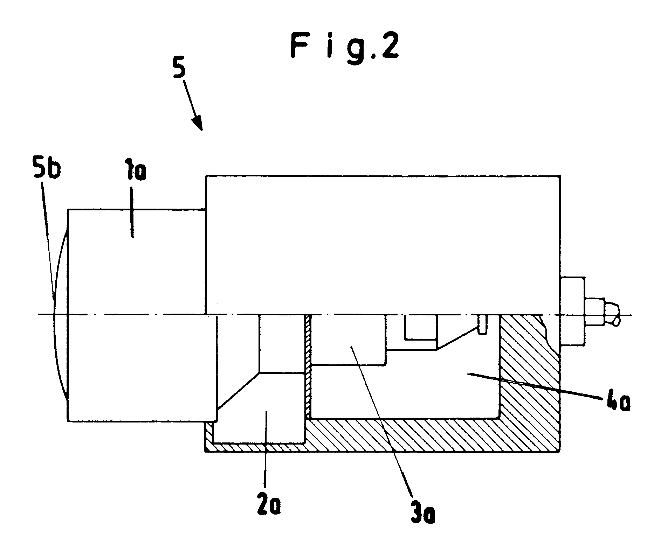

Der UV-Sensor 5 auf den sich die Erfindung beispielhaft stützt, ist in Fig. 2 ersichtlich. Hierfür sind Detektorbausteine ausgewählt, die einen hohen Quantenwirkungsgrad aufweisen, bei gleichzeitig hohem Verstärkungsgrad und großer Pixelzahl, insbesondere über 300.000. Diese Detektorbausteine haben im Gegensatz zu Infrarot-Detektoren ein geringes Eigenrauschen ohne daß eine Kühlung notwendig wäre, d.h das Signalrauschverhältnis gegenüber dem Hintergrund ist wesentlich besser. Daraus und wegen der kleinen Wellenlänge der UV-Strahlung resultiert bei kleiner Bauweise eine hohe Ortsauflösung und eine hohe Detektionsgeschwindigkeit. Der erfindungsgemäße Sensor läßt es in vorteilhafter Weise zu, durch Anwendung von Wechselfiltern 5b in verschiedenen Spektralbereichen zu arbeiten, so daß der UV-Bildverstärker bei Verwendung geeigneter breitbandiger Photokathode gleichzeitig auch im Sichtbaren und nahen Infrarotbereich als Bildsensor verwendet werden kann. Auch UV-Strahler mit relativ geringer Intensität - jedenfalls geringer als im IR-Bereich - können mit dem erfindungsgemäßen Sensor erfaßt werden. Wie Fig. 2 zeigt, weist der UV-Sensor 5 eine Eingangsoptik 1a auf, die eine optimale Transmission im sichtbaren und/oder Solarblindbereich hat. Ferner ist die Eingangsoptik 1a so gewählt, daß sie ein Gesichtsfeld aufweist, das in großer Entfernung, z.B. 5 km oder mehr, noch genügend hohe Auflösung besitzt um eine genaue Lenkung ins Ziel zu erreichen durch elektronischen oder mechanischen Zoom oder Wechselobjektivrevolver.

Ein oder mehrere wechselbare Filter 5b sind vorteilhafterweise dem photoempfindlichen Eingang vorgeschaltet um alle unerwünschten Wellenlängen zu unterdrücken und die ausgewählte optimal zu transmittieren.

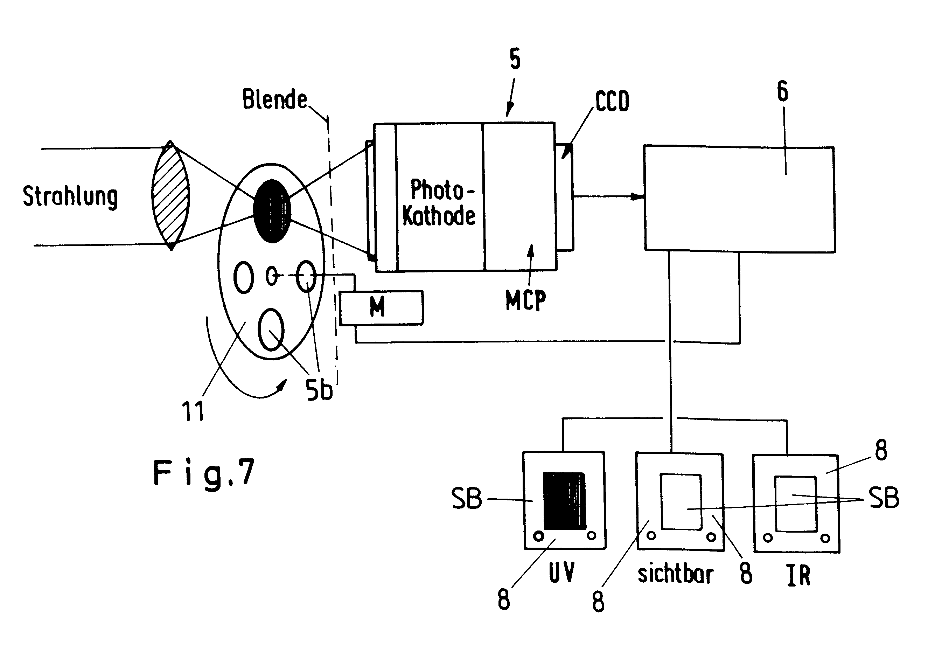

Durch ein drehbares Filterrad mit verschiedenen transmittierten Wellenlängenbereichen und zeitlicher Synchronisation der Filterposition mit der CCD-Bildauslesung kann auf 3 verschiedenen Monitoren z.B. auf dem 1. das UV-Bild, dem 2. Monitor das sichtbare und auf dem 3. das IR-Bild quasi gleichzeitig dargestellt werden (vgl. Fig. 7).

Das UV-Licht wird dann vom Bildwandler 2a in sichtbares Licht umgewandelt und einem Bildverstärker 3a zugeführt. Dieser ist an der Bildauslesung 4a an ein CCD (Charge Coupled Device) zur Bildgebung und Bildauslesung angekoppelt, entweder direkt oder insbesondere mittels Faseroptik.

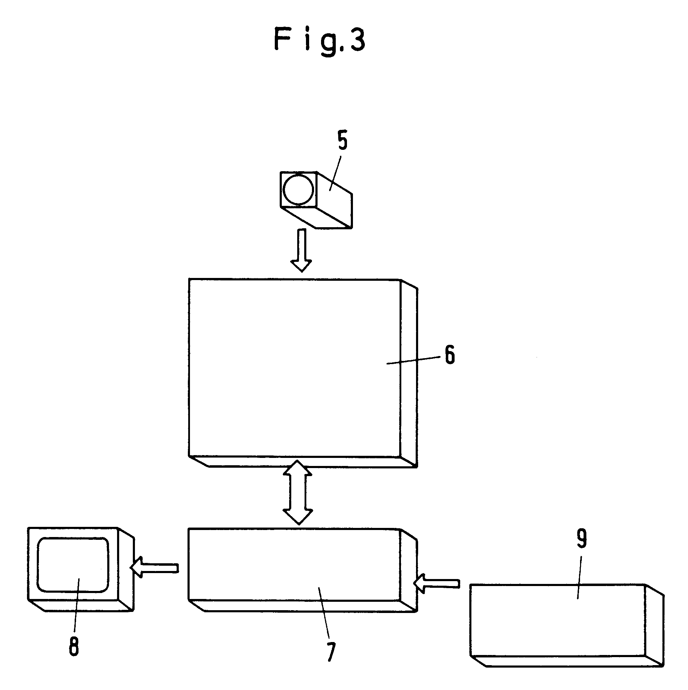

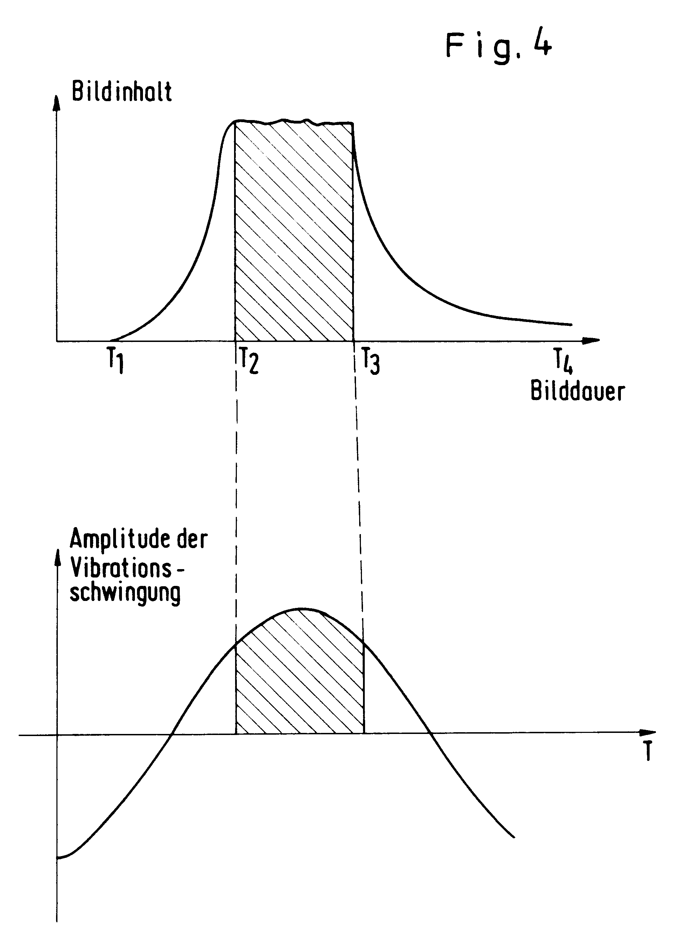

Fig. 3 zeigt ein Blockschaltbild der Hauptkomponenten des Systems mit dem UV-Sensor 5 als Bildsensor, der Signalverarbeitungsstufe 6 und der Bildverarbeitungsstufe mit Rechner 7 sowie dem Geber für Kommandosignale, alle durch Datenbus verbunden. Wahlweise kann statt des UV-Bildsensors auch ein UV-Punktdetektor 9 mit Verstärker und Abtaster mit dem Rechner 7 der Bildverarbeitungsstufe verbunden sein und mit dem Ausgang des Rechners eine Anzeige gegebenenfalls nur zur Kontrolle z.B. am Monitor 8 ausgeben. Zur Verarbeitungsstufe 6 führt die Signalleitung einer Kamera, wie CCD-Kamera oder Videokamera, mit eigener Stromversorgung und Bildspeicher. Die Ansteuerung der Kamera geschieht, wie später noch zu beschreiben ist. Die Kamera ist durch Takten und Zoomen qualitativ hochwertig gewählt. Die Signalverarbeitungsstufe 6 weist digital-analoge Ausgänge auf, die mit der Bildverarbeitungsstufe über Daten-Bus verbunden sind. Der Rechner 7 wertet die Bilder aus, zeigt sie ggfs. bei 8 an und erkennt störsicher das Objekt (Flugkörper), z.B. durch Vergleich mit gespeicherten Bildern oder anderen eingangs genannten Parametern des zu lenkenden, bekannten Flugkörpers bzw. seines Triebwerkes und ermittelt die Ortskoordinaten (Position) und erzeugt dann Lenksignale, die er als Kommando entweder über Draht oder Lichtwellenleiter oder Sendeantennen z.B. für einen Leitstrahl, wie Radar oder Laser, abgibt. Die Auslesung des Bildinhaltes erfolgt mit Vorteil über eine CCD-Kamera, die entweder direkt oder durch Bildwandlung und Verstärkung über eine optische Faserplatte angekoppelt ist oder über Fasertaper (siehe Fig. 4). In vereinfachter Ausführung würde es genügen, den CCD-Chip UV-empfindlich und mit hoher Dynamik auszugestalten.

In weiterer Vereinfachung kann ein UV-strahlenempfindliches Einzeldetektorelement - Bezugszeichen 9 in Fig.3 - verwendet werden, dessen Meßsignal ähnlich wie bei bisherigen IR-Einzeldetektoren verarbeitet und ausgewertet wird. Die Lenkung kann dann wie bei bekannten Systemen die mit IR-Strahlem und einer Modulatorscheibe arbeiten, übernommen werden. Der Abtastmechnismus (Reticle-Scanner) kann ebenfalls übernommen werden, doch wird der infrarot empfindliche Punktdetektor durch einen ultravioletten empfindlichen Punktdetektor ersetzt und am Heck des Flugkörpers befindet sich statt des Wärmestrahlers ein aktiver UV-Strahler. Als UV-Punktdetektoren werden solche auf Silizium- oder GaAs-Basis bevorzugt.

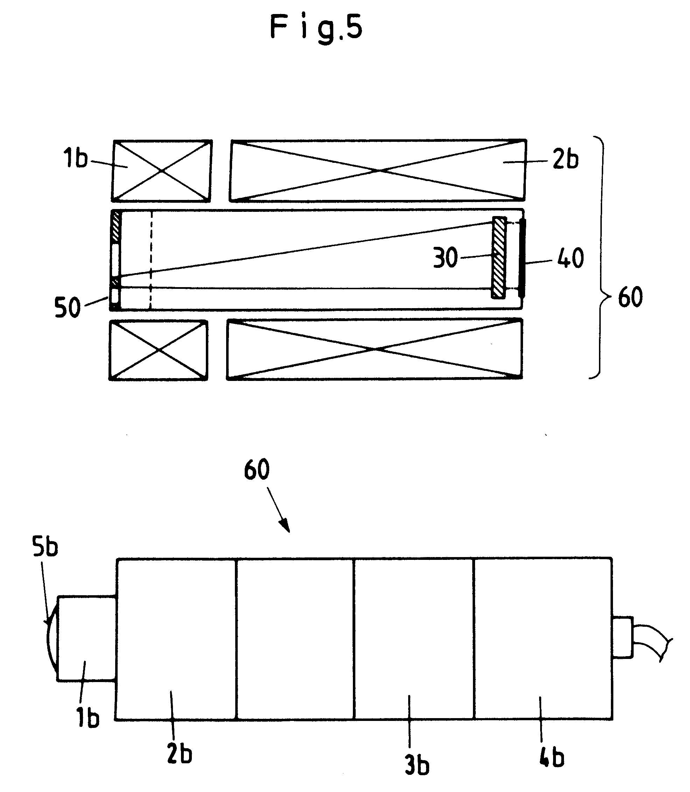

Fig. 4 zeigt die Bildauslesung und -auswertung sowie Zuordnung zu bekannten Mustern (Schwingungsmustern von Flugkörpern oder Triebwerken), die durch Vergleich zu erkennen sind. Eingebaut in die Einheit gemäß Fig. 5 des Erkennungssystems ist zusätzlich der elektronische Zoom (Bildfeldsteuerung) 50. Der Bildverstärker bei 3a kann im Zoom integriert sein ebenso wie der Bildwandler 2a.

Fig. 5 zeigt ein elektrooptische Zoom 50 im einzelnen, nämlich mit einer Vergrößerungsspule 1b, Fokussierungs- und Ablenkspule 2b und einer Mikrokanalplatte (MCP) 3b, die eine Phosphorschicht 4b am ausgangsseitigen Ende aufweist und eine Photokathode 5b am eingangsseitigen Ende der Elektonenvervielfacherröhre 60.

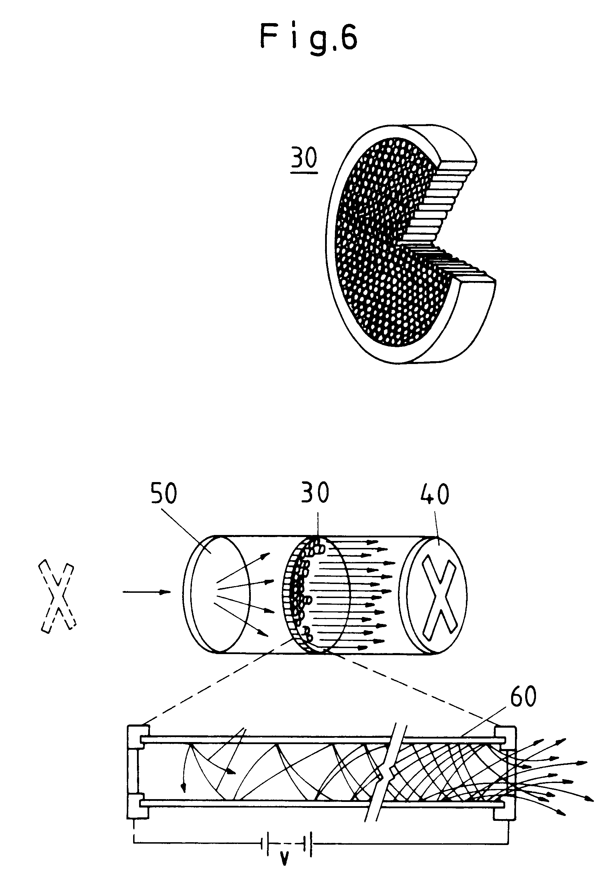

Exemplarisch ist die Mikrokanalplatte 30 mit der Vielzahl von ortsgebundenen Verstärkungskanälen in Fig. 6 oben dargestellt, die Elektronenvervielfacherröhre 60 in der Mitte von Fig. 6 und darunter ein Längsschnitt durch einen herausgegriffenen Kanal. Die Photokathode 50 auf der Eingangsseite für die Strahlung ist ebenso ersichtlich wie die phosphoreszierende Scheibe 40 auf der Ausgangsseite. Photokathode und MCP sind mit einer Spannungsquelle verbunden. Vor der Photokathode 50 ist wie ausgeführt ein Filter 56 oder eine Filterscheibe 11 mit mehreren Filtern vorgeschaltet, wenn ein bestimmter Spektralbereich (auch außerhalb des UV-Spektralbereiches) erwünscht ist.

In Abwandlung der vorbeschriebenen Ausführungen können auch mit mehreren Einzelsensoren oder einem sogenannten Sandwich-Sensor mehrere Spektralbereiche erfaßt und ausgewertet werden.

Eine andere Ausführungsform kann für den Einsatz von IR- und UV-Einzeldetektoren ausgelegt werden bei Verwendung ebenfalls einer gemeinsamen Eingangsoptik und Strahlteilung über dichroitische Spiegel, wie sie als Stand der Technik insbesondere für Resonatorspiegel bei Lasen, verwendet werden. Die sich daran anschließende Signalverarbeitung geschieht dann parallel für beide Sensoren, nämlich den IR-Sensor und den UV-Sensor. Ebenso die Auswertung und Quasi-Echtzeit-Gewinnung von Lenksignalen, die dann als Kommando für die Einhaltung einer bestimmten Bahn bzw. Flugrichtung an den Flugkörper weitergegeben werden, der diese in an sich bekannter Weise zur Flugkörper-Lenkung ,z.B. über Radar, umsetzt. Bevorzugt ist ein Bodengerät mit einem Zentralrechner, zugleich als Leit- und Kommandostand, und bevorzugt mit Abschußvorrichtung für den Flugkörper. Selbstverständlich können diese Komponenten auch räumlich getrennt werden und Einzelschritte bzw. Anweisung oder Ausführung manuell oder halbautomatisch durchgeführt werden.

Bei Einsatz von UV-Einzeldetektoren erfolgt die Signalverarbeitung analog der bisher praktizierten Signalverarbeitung von IR-Einzeldetektoren.

Bei Einsatz von UV-bildgebenden Focal-Plane-Array-Sensoren erfolgt die Signalauswertung über bildverarbeitende Rechnersysteme.

Das Bildverarbeitungssystem arbeitet im Tracking-Verfahren, das die UV-Signatur erkennt, seine Ortskoordinaten bestimmt und in geeigneter Form in Lenksignale umsetzt. Beim Start des Flugkörpers ist das Signal der UV-Signatur groß und gewegt sich in der Regel vom Bildrand zur Bildfeldmitte. Die UV-Signatur wird immer schwächer, wobei die Empfangsleistung des UV-Signals die Reichweite des System bestimmt. Der Transmissionsbereich des optischen Filters ist auf das Emissionsspektrum der UV-Strahlungsquelle abgestimmt.

Ist die UV-Lichtquelle pyrotechnischer oder elektrischer Art, so erfolgt die Emission bevorzugt in Form von Linienstrahlung, d.h. es können schmalbandige Filter zur Hintergrundunterdrückung eingesetzt werden. Diese Maßnahme verbessert das Signal/Rauschverhältnis zusätzlich. Es kann ein Wellenlängenbereich gewählt werden, der bezüglich der atmosplärischen Absorption günstig liegt.

In Verbindung mit der Erfindung ergeben sich noch folgende Vorteile:
Aufgrund seiner speziellen Eigenschaften kann der UV-Sensor diese in vorteilhafterweise nutzen. Bezogen auf den bisherigen Stand der Technik erzielt der UV-Sensor bei der Erfindung verbesserte Ortungserfolge oder anders ausgedrückt ist die Fehlortungsrate reduziert. Hierdurch erzielt ein Flugkörper oder ähnliches Objekt bemannt oder unbemannt oder ein Geschoß das fenigelenkt wird (wenigstens beim Anflug auf ein Ziel) höhere Trefferwahrscheinlichkeiten.

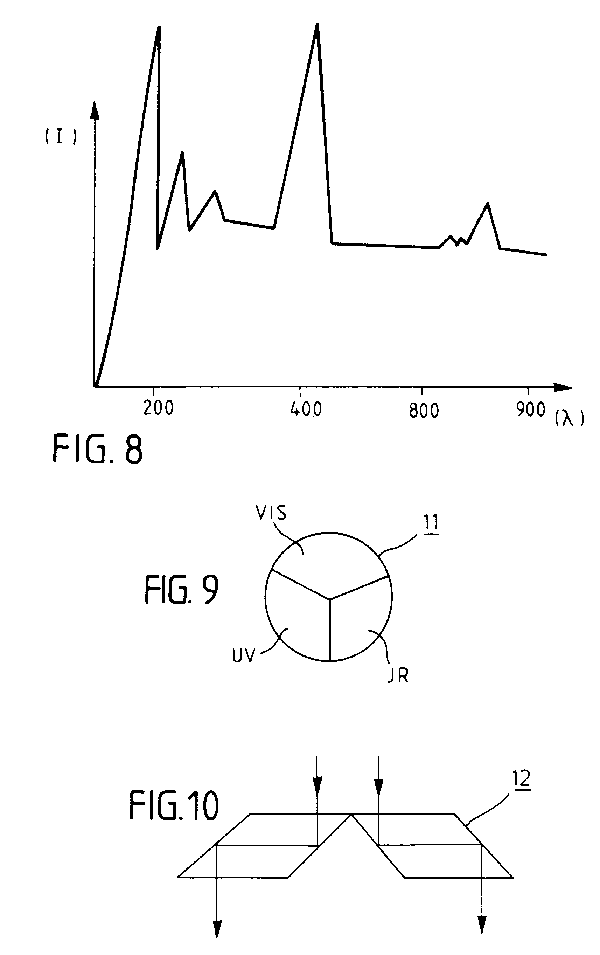

In einer anderen Ausführungsform der Erfindung wie in den Figuren 9 bis 12 dargestellt und nachstehend erläutert, wird ein multispektraler Sensor geschaffen, dessen spektralempfindliche Bereiche durch die freiwählbaren Transmissionseigenschaften innerhalb eines sehr weiten Bereiches etwa 200 bis 900 nm gegeben sind, insbesondere durch den Einsatz eines optischen Elementes 12 vor der Eingangsoptik. Der spektrale Bereich, welcher auswertbar ist, ist in Fig. 8 dargestellt. Dabei ist auf der Ordinate die Intensität der Strahlung und auf der Abzisse die Wellenlängen zwischen 200 bis 900 nm dargestellt (g). Es sind deutlich verschiedene Intensitätsmaxima sichtbar, wie sie in zu betrachtenden Szenen vorkommen.

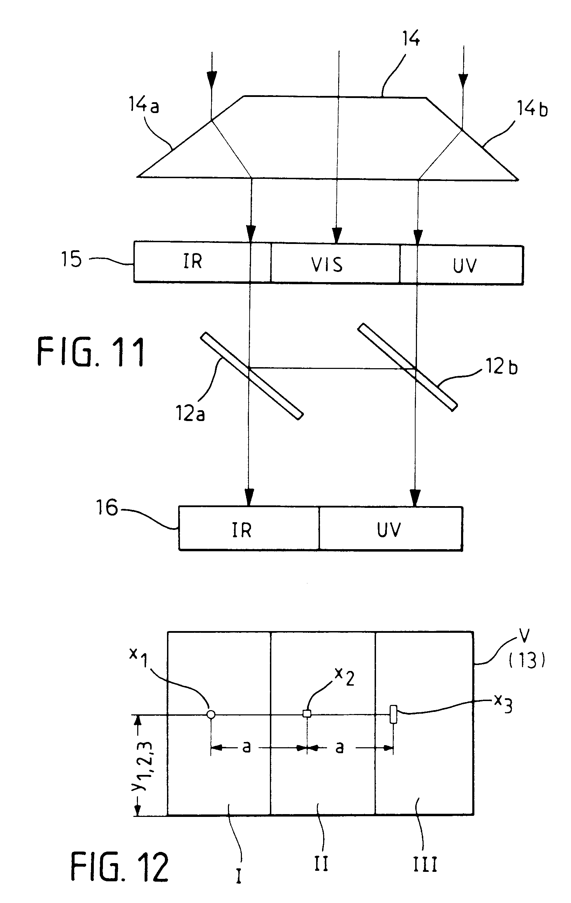

Da der fotoempfindliche Teil des Sensors Fig. 1 rechts, Fig. 7 rechts am Sensor 5 sowohl als Sensor als auch als Verstärkungselement ausgebildet ist, insbesondere als Photokathode mit integriertem Bildverstärker, sind die Sensoreigenschaften mit hoher Dynamik den jeweiligen Gegebenheiten einer Szene leicht anpaßbar. Zur Erläuterung dessen wird nachfolgend ein spezieller Fall rein beispielsweise, zum besseren Verständnis, ausgewählt:
Der Sensor habe als fotoempfindlichen Teil eine Photokathode, z.B. Typ S 20 von ca. 200 nm bis 850 nm empfindlich und ist mit einem nachgeschalteten Bildverstärker und Bildauslesung über CCD-Sensorik versehen. Das optische Element vor der Strahleneingangsoptik teile das Bild der Szene derart auf, daß auf die CCD-Matrix parallel versetzt drei gleiche Bildszenen I, II,III abgebildet werden (vgl. Fig. 12). Ist das optische Element zusätzlich dahingehend abgewandelt, daß nur je Bildteil ein charakteristischer Spektralbereich SB (UV, VIS, IR oder Grün/Rot/Blau) transmittiert wird, so liegt pro Bildfeld des Videobildes die gleiche Szene in drei verschiedenen Spektralbereichen SB gleichzeitig vor.

Wird nun zur Ortung und Erkennung eines Objekts, wie Flugkörper, eine spezielle Wellenlänge als signifikant erkannt, so erscheint diese Strahlung bei geeigneter spektraler Filterung in der Linsen- oder Filteranordnung und mit Hilfe von Spiegeln 12a, 12b wie in Fig. 10 und 11 zu gleichen Zeiten als dreifacher Lichtpunkt X₁, X₂, X₃ auf dem Videobild V (vgl. 13 in Fig. 12). Dies ergibt eine eindeutige Ortung und Erkennung eines Objektes, sowohl nach ihrem Abstand in der X- und Y-Achse auf dem Videobild als auch hinsichtlich, der Form der Bildpunkte, die einem Objekt entsprechen, siehe X₁, X₂ und X₃ in Fig. 12 mit den senkrechten Abständen X₁, X₂ und X₃. Dabei sind die seitlichen Verschiebungen der Abstände a hier der Objekte untereinander konstant.

Bei dieser Ausführung kann eine übliche Tricklinse 11 mit verschiedenartigen Schichten angewandt werden, wie sie z.B. in Fig. 9 dargestellt ist. Die Bereiche, hier VIS, UV, IR oder Grün/Rot/Blau oder andere, können beliebig gewählt werden, nicht nur sektorförmig, sondern auch mit einem Zentralbereich. Die Bereiche können sich teilweise überlappen oder überdecken.

Fig. 10 zeigt eine Spiegelbauart, wie sie zur Umlenkung der Lichtstrahlen und Selektion einzelner Spektralbereich mit angewandt werden kann. Die Linsenanordnung ist mit 11 bezeichnet und kann z.B. an die Stelle einer drehbaren Filterscheibe, gem. Fig. 7, treten.

Der Spiegel 12 ist insbesondere geeignet im Strahlengang (wie in Fig. 11) spezielle Vereinzelungen zu erleichtern.

In der Fig. 11 ist als optisches Element eine Linsen- bzw. Prismenanordnung 14 eingesetzt, wobei dieses Prisma insbesondere aus Quarz oder Fluoridglas oder anderem Material ähnlich guter optischer Eigenschaften besteht. Die seitlich abgeschrägten Flächen 14a und 14b bestehen aus unterschiedlichen selektiven Filterschichten, je nach dem welcher Spektralbereich auszuwerten gewünscht ist. Unter dem Prisma 14 ist in Fig. 11 ein Bildgeber 15 und eine Spiegelanordnung 12a und 12b dargestellt, dahinter im Strahlengang ein selektierter Bildgeber 16. Solche optischen Elemente, wie Strahlteiler, Spiegel, Filter, Prismen, Linsen usw. sind an sich bekannt. Nicht dargestellt ist die Bildauswertung, insbesondere dynamische Auswertung und Bildanalyse mit Hilfe eines Rechners. Dies gilt auch für Fig. 12, wo das Videobild 13 z.B. auf einem Monitor rechnergestützt gewonnen wird, mit Hilfe eines nicht dargestellten Rechners, in dem auch die Algorithmen für die Auswertung der Bildinhalte gespeichert sind. Nur so ist eine fehlerfreie Erkennung des Objektes über die gesamte Flugbahn möglich.

## Patentansprüche

1. Verfahren zum Lenken von bewegten Objekten (1) wie Flugkörper, Granaten etc., die vom Start weg in den freien Raum mittels einer elektrooptischen Sensoreinrichtung im Objekterfassungssystem einer Bodenstation (2) geführt werden, welches laufend die Position des bewegten Objektes auf seiner Bahn ortet und die gewonnenen Signale einer Signalverarbeitungs- und Auswerteschaltung (6) der Bodenstation (2) zur Ermittlung von Lenkkommandos eingibt, **dadurch gekennzeichnet**, daß dem Objekterfassungssystem der Bodenstelle (2) ein bildgebender Sensor (5) großer Dynamik zugeordnet wird, der in eine Multi-Spektralbereich von Ultraviolett bis nahes Infrarot empfindlich ist und dem wahlweise Filter (5b) verschiedener transmittierender Wellenlängenbereiche vorgeschaltet sind, wobei die bildgebenden Sensor-Signale zur Generierung der Objekt-Lenkkommandos einem Leitrechner (7) der Bodenstation (2) eingegeben werden und wobei zur Ortung entweder die UV-Strahlensignatur seines Triebwerkes oder am Objekt (1) eine die Ortung erleichternde, stromversorgte und steuerbare Strahlenquelle (St) verwendet wird, die in Pulsdauer und Modulation codiert ist.

2. Verfahren nach Anspruch 1, **dadurch gekennzeichnet**, daß durch die Ortsdetektion des Objektabgasstrahls (4) bezüglich seiner Strahlungseigenschaften in einem Bereich von UV- bis zum nahen IR-Licht, die Ortung oder Lenkung des Objektes (1) erfolgt.

3. Verfahren nach Anspruch 1 oder 2, **dadurch gekennzeichnet**, daß zur fehlerfreien Ortung des Objektes (1) dem Treibstoff des Objekttriebwerkes chemische Zusätze zur definierten Beeinflussung spezieller Eigenschaften des Abgasstrahles (4) - auch Plume genannt - beigefügt werden.

4. Verfahren nach einem der Ansprüche 1 bis 3, **dadurch gekennzeichnet**, daß zusätzlich zum Triebwerk des Objektes (1) ein pyrotechnischer oder Leuchtsatz (St) mit einem hohen Anteil der von ihm ausgesendeten Strahlung im ultravioletten Spektralbereich verwendet wird.

5. Vorrichtung zum Lenken von bewegten Objekten (1) wie Flugkörper, Granaten etc., die vom Start weg in den freien Raum mittels einer elektrooptischen Sensoreinrrichtung im Objekterfassungssystem einer Bodenstation (2) geführt werden, wobei dieses Objekterfassungssystem laufend die Position des bewegten Objektes (1) ortet und die eintreffenden Signale einer Signalverarbeitungs-und Auswertschaltung der Bodenstation (2) eingibt, die ihrerseits mit ihrem Lenkkommando-Rechnersystem (7) die Steuerung des Objektes (1) durchführt, **dadurch gekennzeichnet**, daß das Objekterfassungssystem mit einem bildgebenden Sensor (5) großer Dynamik versehen ist, der einen weiten Spektralbereich (SB) zur Erkennung der UV- bis nahen IR-Strahlung aufweist, und daß Filter (5b) verschieden transmittierender Wellenlängenbereiche auf einem Filterrad integriert sind, wobei zur Gewinnung der Lenkkommandos je nach Einfallsrichtung die Strahlung (St) verschiedener Spektralbereiche dem Rechner (7) der Signalverarbeitungsstufe (6) in der zugeordneten Bodenstation (2) zugeführt werden und in dem Rechner (7) Auswertealgorithmen bezüglich vorbekannter Flugkörperstrahlungs- und Bewegungseigenschaften gespeichert sind, wobei durch Analyse der Bildinhalte über die gesamte Flugbahn eine eindeutige Ortung und Erkennung durchgeführt wird.

6. Vorrichtung nach Anspruch 5, **dadurch gekennzeichnet**, daß der bildgebende Sensor (5) ein UV-strahlenempfindlicher Sensor aus Detektorbausteinen mit hohem Quantenwirkungsgrad ist und gleichzeitig einen hohen Verstärkungsgrad und eine große Pixelzahl aufweist und im UV-Solar-Blindbereich empfindlich ist, wobei ihm eine Eingangsoptik (1a) zugeordnet ist, die ein hochaufgelöstes Gesichtsfeld (10) erzeugt und vor dem Sensor (5) die Filter (5b) vorgeschaltet sind, die die nicht zu erfassenden Wellenlängenbereiche der Strahlungsquellen unterdrücken.

7. Vorrichtung nach Anspruch 5 oder 6, **dadurch gekennzeichnet**, daß der Sensor (5) als elektrooptischer Baustein - vorzugsweise mit einem CCD-Chip - ausgebildet ist und in dem Bildwandler (2a) und Bildverstärker (3a) integriert sind.

8. Vorrichtung nach einem der Ansprüche 5 bis 7, **dadurch gekennzeichnet**, daß zur Bildgebung eine Elektronenvervielfacherröhre (60) eingesetzt ist, der eine Mikrokanalplatte (30) und ein Focal-Plan-Array (40) zugeordnet sind.

9. Vorrichtung nach einem der Ansprüche 5 bis 8, **dadurch gekennzeichnet**, daß sie mit einem elektronischen Zoom und der UV-empfindliche Sensor (5) mit einem Punktdetektor versehen ist.

10. Vorrichtung nach einem der Ansprüche 5 bis 9, **dadurch gekennzeichnet**, daß die Filter (5b) mit zeitlicher Synchronisation der Filterpositionen mit der CCD-Bildauslesung und einer künstlichen Computerintelligenz ermöglichen, daß auf mindestens einem Monitor (8) gleichzeitig das UV-Bild, das im Augensichtbereich liegende Bild und das IR-Bild darstellbar sind.

11. Vorrichtung nach einem der Ansprüche 5 bis 10, **dadurch gekennzeichnet**, daß mittels zeitlich definierter und codierter UV - IR-Lichtquellensignale in der Signalverarbeitungsstufe (6) und der Bildverarbeitungsstufe mit Rechner (7) die Erkennungssicherheit gewährleistet ist

12. Vorrichtung nach einem der Ansprüche 5 bis 11**, dadurch gekennzeichnet**, daß ein UV-Punktdetektor (9) mit Verstärker (3a) und Abtaster mit dem Rechner (7) der Bildverarbeitungs- bzw. Signalverarbeitungsstufe (6) verknüpft ist.

13. Vorrichtung nach einem der Ansprüche 5 bis 12, **dadurch gekennzeichnet**, daß die Bildauslesung (4a) über eine CCD-Kamera erfolgt, die direkt oder durch Bildwandlung und Verstärkung über eine optische Faserplatte angekoppelt ist.

14. Vorrichtung nach einem der Ansprüche 5 bis 13, **dadurch gekennzeichnet**, daß die Signalverarbeitungsstufe (6) digital-analoge Ausgänge aufweist, die über Daten-Bus mit der Bildverarbeitungsstufe (2a,3a) verbunden sind.

15. Vorrichtung nach einem der Ansprüche 5 bis 14, **dadurch gekennzeichnet**, daß zur Bildgewinnung eine Nachtsichtkamera mit Restlichtverstärker verwendet wird.

16. Vorrichtung nach einem der Ansprüche 5 bis 15, **dadurch gekennzeichnet**, daß vor der Eingangsoptik (1a) des UV - IR-empfindlichen Sensors (5) ein optisches Element (14) angeordnet ist, das die Bildfeldebene mehrfach in einem anderen spektralen Fenster darstellt und aus einer Prismen-(12) oder Spiegel-Strahlteiler (12a, 12b) bzw.Linsenanordnung besteht.

17. Vorrichtung nach einem der Ansprüche 5 bis 16, **dadurch gekennzeichnet**, daß die Bodenstation (2) mit einer Bildaufbereitungs- und - auswerteschaltung versehen ist, die spektral selektiv, dynamisch und in Echtzeit die Bildinhalte bezüglich der vorbekannten Form, der Bewegungsdynamik, des Intensitätsverlaufs und der örtlichen Zuordnung innerhalb der verschiedenen spektralen Fenster auswerten.

18. Vorrichtung nach einem der Ansprüche 5 bis 17, **dadurch gekennzeichnet**, daß die Mikrokanalplatte (30) der Elektronenvervielfacherröhre (6) eine Vielzahl von ortsgebundenen Verstärkungskanälen aufweist.

## Claims

1. Method for the guidance of moving objects (1) such as missiles, shells etc. which are guided away after being launched into free space by means of an electrooptic sensor device in the object detection system of a ground station (2) which continuously locates the position of the moving object on its path and enters the attained signals in a signal processing and evaluation circuit (6) in the ground station (2) in order to determine guidance commands, characterized in that the object detection system of the ground point (2) is assigned an imaging sensor (5) which has a wide dynamic range, is sensitive in a multi-spectral band from ultraviolet to close-infrared and upstream of which filters (5b) having different transmitting wavelength bands are optionally connected, the imaging sensor signals being entered into a host computer (7) at the base station (2) in order to generate object guidance commands, and either the UV radiation signature of its motor or, on the object (1), a radiation source (St) being used for position finding, which radiation source (St) simplifies location, is supplied with electrical power, is controllable and whose pulse duration and modulation are coded.

2. Method according to Claim 1, characterized in that the position finding or guidance of the object (1) is carried out by detecting the position of the object's exhaust gas jet (4) in terms of its radiation properties in a band from UV light to close-IR light.

3. Method according to Claim 1 or 2, characterized in that chemical additives are added to the fuel of the object's motor in order to find the position of the object (1) without errors, said chemical additives being added in order to influence specific properties of the exhaust gas jet (4) - also called the plume - in a defined manner.

4. Method according to one of Claims 1 to 3, characterized in that a pyrotechnic or flare charge (St) having a high proportion of the radiation transmitted by it in the ultraviolet spectral band is used in addition to the motor of the object (1).

5. Device for the guidance of moving objects (1) such as missiles, shells, etc. which are guided away after being launched into free space by means of an electrooptic sensor device in the object detection system of a ground station (2), this object detection system continuously locating the position of the moving object (1) and entering the incident signals in a signal processing and evaluation circuit at the ground station (2) which, for its part, carries out the control of the object (1) by means of its guidance command computer system (7), characterized in that the object detection system is provided with an imaging sensor (5) which has a wide dynamic range and has a wide spectral band (SB) in order to identify the UV radiation to the close-IR radiation, and in that filters (5b) having different transmitting wavelength bands are integrated on a filter wheel, the radiation (St) in various spectral bands being supplied, depending on the incidence direction, to the computer (7) of the signal processing stage (6) in the associated ground station (2) in order to obtain the guidance commands, and evaluation algorithms relating to previously known missile radiation and movement properties being stored in the computer (7), unambiguous position finding and identification being carried out by analysis of the image contents over the entire trajectory.

6. Device according to Claim 5, characterized in that the imaging sensor (5) is a sensor which is sensitive to UV radiation, is composed of detector modules having a high quantum efficiency, at the same time has a high gain level and a large number of pixels and is sensitive in the UV-solar blind band, input optics (1a) being assigned to it, which input optics (1a) produce a field of view (10) with high resolution and the filters (5b) are connected upstream of the sensor (5), which filters (5b) suppress those wavelength bands of the radiation sources which are not to be detected.

7. Device according to Claim 5 or 6, characterized in that the sensor (5) is designed as an electrooptical module - preferably having a CCD chip - and is integrated in the image converter (2a) and the image intensifier (3a).

8. Device according to one of Claims 5 to 7, characterized in that an electron multiplier tube (60) is used for imaging and is assigned a microchannel plate (30) and a focal-plane array (40).

9. Device according to one of Claims 5 to 8, characterized in that said device is provided with an electronic zoom, and the UV-sensitive sensor (5) is provided with a point detector.

10. Device according to one of Claims 5 to 9, characterized in that the filters (5b) use time synchronization of the filter position to the CCD image readout, and artificial computer intelligence to make it possible to display the UV image, the image in the visual band and the IR image simultaneously on at least one monitor (8).

11. Device according to one of Claims 5 to 10, characterized in that the identification reliability is ensured in the signal processing stage (6) and the image processing stage, using the computer (7), by means of UV - IR light source signals which are coded and defined in time.

12. Device according to one of Claims 5 to 11, characterized in that a UV point detector (9) is linked by means of an amplifier (3a) and a sample device to the computer (7) of the image processing and signal processing stage (6).

13. Device according to one of Claims 5 to 12, characterized in that the image readout (4a) is produced via a CCD camera which is directly coupled or is coupled by means of image conversion and intensification, via an optical fibre plate.

14. Device according to one of Claims 5 to 13, characterized in that the signal processing stage (6) has digital/analogue outputs which are connected via databus to the image processing stage (2a, 3a).

15. Device according to one of Claims 5 to 14, characterized in that a nightsight camera having a residual light intensifier is used for image recovery.

16. Device according to one of Claims 5 to 15, characterized in that an optical element (14) is arranged in front of the input optics (1a) of the UV - IR-sensitive sensor (5), which optical element (14) displays the plane of the image field a plurality of times in another spectral window and is composed of a prismatic beam divider (12) or a mirror beam divider (12a, 12b) and/or a lens arrangement.

17. Device according to one of Claims 5 to 16, characterized in that the ground station (2) is provided with an image conditioning and evaluation circuit, which circuits evaluate the image contents, in a spectrally selective and dynamic manner and in real time, with respect to the previously known shape, the motion dynamics, the intensity profile and the spatial assignment within the various spectral windows.

18. Device according to one of Claims 5 to 17, characterized in that the microchannel plate (30) of the electron multiplier tube (6) has a multiplicity of position-linked amplification channels.

## Revendications

1. Procédé pour le guidage d'objets (1) en mouvement tels que des missiles, des obus, etc... qui, depuis leur lancement dans l'espace, sont guidés à l'aide d'un système électro-optique de détecteurs intégré dans le système d'acquisition d'objet d'une station au sol (2) qui détermine en continu la position de l'objet en mouvement sur sa trajectoire et transmet les signaux obtenus à un circuit (6) de traitement et d'exploitation de signal de ladite station au sol (2) aux fins de définir des ordres de guidage, caractérisé par le fait que l'on associe au système d'acquisition d'objet de la station au sol (2) un détecteur de génération d'image (5) à dynamique élevée, qui est sensible dans un domaine incluant plusieurs spectres allant de l'ultraviolet à l'infrarouge proche et en amont duquel est placé un filtre (5b) qui laisse passer des plages de longueur d'ondes différentes, les signaux d'image du détecteur étant transmis à un calculateur de guidage (7) de la station au sol (2) aux fins de générer des ordres de guidage d'objet et, soit la signature du rayonnement UV du propulseur de l'objet, soit une source de rayonnement (St) commandée, alimentée en courant, placée sur l'objet (1) et facilitant le repérage, qui assure un codage en durée d'impulsion et en modulation, étant utilisée.

2. Procédé selon la revendication 1, caractérisé par le fait que le repérage et le guidage de l'objet (1) sont effectués par détection de la situation du jet de gaz brûlés (4) de l'objet sur le plan de ses caractéristiques de rayonnement à l'intérieur d'une plage allant de l'ultra-violet jusqu'à l'infra-rouge proche.

3. Procédé selon la revendication 1 ou la revendication 2, caractérisé par le fait que, pour le repérage sans faille de l'objet (1), on incorpore au combustible du propulseur dudit objet des additifs chimiques aux fins de modifier de manière contrôlée certaines caractéristiques particulières du jet de gaz brûlés (4) - également appelé panache.

4. Procédé selon l'une des revendications 1 à 3, caractérisé par le fait que l'on utilise, en plus de propulseur de l'objet (1), une charge pyrotechnique ou éclairante (St) dans laquelle une part importante du rayonnement émis est située dans le domaine ultra-violet du spectre.

5. Dispositif pour guider des objets (1) en mouvement tels que des missiles, des obus, etc... qui, depuis leur lancement dans l'espace sont guidés à l'aide d'un système électro-optique de détecteurs faisant partie du système d'acquisition d'objet d'une station au sol (2), lequel système d'acquisition d'objet détermine en continu la position de l'objet (1) en mouvement sur sa trajectoire et transmet les signaux reçus à un circuit de traitement et d'exploitation de signal de la station au sol (2) qui, de son côté, par son système de calcul (7) d'ordres de guidage, commande l'objet (1), caractérisé par le fait que le système d'acquisition d'objet est doté d'un détecteur de génération d'image (5) à dynamique élevée qui présente un domaine spectral (SB) étendu permettant de détecter des rayonnements allant de l'ultraviolet à l'infrarouge proche, par le fait que des filtres (5b) qui laissent passer des plages de longueur d'ondes différentes sont intégrés dans une roue à filtres, aux fins d'obtenir les ordres de guidage, le rayonnement (St) de domaines spectraux différents suivant la direction d'incidence étant transmis au calculateur de guidage (7) de l'étage (6) de traitement de signal de la station au sol (2) associée et des algorithmes d'exploitation portant sur des caractéristiques préétablies de rayonnement et de déplacement du missile étant mémorisés dans le calculateur, une localisation et une identification exactes étant réalisées par analyse des contenus d'image sur l'ensemble de la trajectoire.

6. Dispositif selon la revendication 5, caractérisé par le fait que le détecteur d'image (5) est un détecteur sensible au rayonnement UV constitué de composants à rendement quantique élevé combiné à un taux d'amplification élevé, lequel détecteur comporte un grand nombre de pixels et présente une sensibilité dans le domaine des UV solaires occultés, une optique d'entrée (1a) qui produit un champ d'image (10) à résolution élevée étant associée au détecteur et les filtres (5b) qui éliminent les domaines de longueur d'ondes ne devant être pas détectés des sources de rayonnement étant placés devant le dit détecteur.

7. Dispositif selon la revendication 5 ou la revendication 6, caractérisé par le fait que le détecteur (5) est agencé sous forme de composant électro-optique - de préférence avec plaquette CCD - et qu'un convertisseur d'images (2a) et un amplificateur d'images (3a) sont intégrés dans celui-ci.

8. Dispositif selon l'une des revendications 5 à 7, caractérisé par le fait que pour former l'image on utilise un tube multiplicateur d'électrons (60) auquel sont associés une plaque à microcanaux (30) et une cible focale (40)

9. Dispositif selon l'une des revendications 5 à 8, caractérisé par le fait qu'il est pourvu d'un zoom électronique et que le détecteur (5) sensible aux UV est pourvu d'un détecteur ponctuel.

10. Dispositif selon l'une des revendications 5 à 9, caractérisé par le fait qu'au moyen de filtres (5b) à synchronisation dans le temps de leur position en fonction de la sélection d'image CCD et d'une intelligence artificielle on représente sur au moins un moniteur (8) simultanément l'image UV, l'image dans le domaine visible et l'image IR.

11. Dispositif selon l'une des revendications 5 à 10, caractérisé par le fait que la sécurité de repérage est assurée au moyen de signaux UV et de signaux IR définis dans le temps et codés dans l'étage de traitement de signal (6) et l'étage de traitement d'image comportant un calculateur (7).

12. Dispositif selon l'une des revendications 5 à 11, caractérisé par le fait qu'un détecteur ponctuel (9) d'UV doté d'un amplificateur (3a) et d'un dispositif de balayage est couplé au calculateur (7) de l'étage de traitement d'image ou de l'étage de traitement de signal (6).

13. Dispositif selon l'une des revendications 5 à 12, caractérisé par le fait que la sélection d'image (4a) est opérée par l'intermédiaire d'une caméra CCD qui est couplée directement ou en passant par un moyen de conversion d'image et d'amplification par l'intermédiaire une plaque optique à fibres.

14. Dispositif selon l'une des revendications 5 à 13, caractérisé par le fait que l'étage de traitement de signal (6) comporte des sorties numériques-analogiques qui communiquent avec l'étage de traitement d'image (2a, 3a) par l'intermédiaire de bus de données.

15. Dispositif selon l'une des revendications 5 à 14, caractérisé par le fait que pour l'obtention d'images l'on utilise une caméra pour prise de vue nocturne dotée d'un intensificateur de lumière résiduelle.

16. Dispositif selon l'une des revendications 5 à 15, caractérisé par le fait qu'un élément (14) optique est disposé devant l'optique d'entrée (1a) du détecteur (5) sensible aux rayonnements UV - IR, lequel élément optique représente le plan du champ d'image plusieurs fois dans une fenêtre spectrale différente et se compose d'un diviseur de rayon à prismes (12) ou à miroirs (12a, 12b) ou d'un système de lentilles.

17. Dispositif selon l'une des revendications 5 à 16, caractérisé par le fait que la station au sol (2) est dotée d'un circuit de traitement et d'exploitation d'image qui effectue le traitement de manière sélective du point de vue du spectre, de manière dynamique et en temps réel des contenus d'image sur le plan de la forme préalablement connue, de la dynamique de déplacement, del'évolution de l'intensité et des conditions locales à l'intérieur des différentes fenêtres spectrales.

18. Dispositif selon l'une des revendications 5 à 17, caractérisé par le fait que la plaque à microcanaux (30) des tubes multiplicateurs d'électrons (6) comportent une pluralité de canaux d'amplification fixes.
